# FASCICULE DE BREVET EUROPEEN

(11) **EP 0 797 496 B1**
(45) Date de publication et mention de la délivrance du brevet: **09.09.1998**
(21) Numéro de dépôt: 95942746.9
(22) Date de dépôt: 14.12.1995
(51) Int. Cl.: B29B 17/02, B03B 9/06, C08J 11/10

(54) **PROCEDE DE TRAITEMENT DE MATERIAUX COMPOSITES EN VUE DE LEUR RECYCLAGE**
VERFAHREN ZUR WIEDERVERWENDUNG VON VERBUNDWERKSTOFFEN
METHOD FOR PROCESSING COMPOSITE MATERIALS TO ENABLE RECYCLING THEREOF

(30) Priorité: 16.12.1994 FR 9415174
(43) Date de publication de la demande: 01.10.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: VALLET, André, F-33160 Saint-Aubin-du-Médoc (FR); DELMAS, Michel, F-31320 Auzeville-Tolosane (FR); FARGERE, Thierry, F-60000 Beauvais (FR); SACHER, Gilles, F-31400 Toulouse (FR)
(74) Mandataire: Le Roux, Martine
(86) Numéro de dépôt international: FR9501671
(87) Numéro de publication internationale: WO9618484

(56) Documents cités:
- FR-A- 2 685 339
- US-A- 5 073 273
- US-A- 5 264 640
- DATABASE WPI Section Ch, Week 8231 Derwent Publications Ltd., London, GB; Class ACS, AN 82-65269E C31! & SU,A,852 900 (RUBEZHAN BR. VOROSH.) , 7 Août 1981
- DATABASE WPI Section Ch, Week 7939 Derwent Publications Ltd., London, GB; Class ACS, AN 79-70765B C39! & JP,A,54 105 182 (NIHON KOGYO K.K.) , 17 Août 1979

## Description

La présente invention a pour objet un procédé de traitement de matériaux composites, comprenant une matrice et des fibres de renfort, en vue du recyclage desdits matériaux.

Ledit procédé est particulièrement intéressant dans la mesure où il s'inscrit dans le contexte de la valorisation matière. En effet, sa mise en oeuvre permet de séparer les fibres de la matrice et de récupérer lesdites fibres dans un état tel qu'elles peuvent être recyclées à titre de fibres de renfort.

La question du recyclage des déchets type matériaux composites, notamment thermodurcissables et thermoplastiques, ne se posait pas vraiment, jusqu'a un passé très récent. En effet, on avait coutume de déposer ce type de déchets en décharge, ce qui était très pratique et avantageux économiquement.

Or, depuis quelques années, notamment sous la poussée écologique, les décharges sont en nombre de plus en plus limité et leur capacité d'absorption se réduit. On observe une grimpée vertigineuse du prix de la mise en décharge... Par ailleurs, l'entrée en vigueur prochaine de réglementations nationales et/ou communautaires, très strictes, limitera la mise en décharge aux déchets ultimes (non recyclables).

Il est donc devenu impératif de mettre au point des procédés de traitement de ces matériaux composites en vue notamment de leur recyclage.

Des recherches ont été menées dans plusieurs directions et on a proposé trois principales voies de valorisation desdits matériaux composites :
- la "valorisation thermique" selon laquelle lesdits matériaux sont incinérés pour produire de l'énergie. Cette voie est toutefois peu adaptée aux déchets de composites dans la mesure où ils présentent un pouvoir calorifique relativement faible. En effet, les charges minérales de la matrice et les fibres de renfort, inertes à la combustion, peuvent représenter jusqu'à 70 % en poids desdits matériaux. Par ailleurs, à l'issue de l'incinération de tels matériaux, on obtient une quantité importante de mâchefers...
- la "valorisation matière" selon laquelle lesdits matériaux sont broyés et micronisés. Cette voie mécanique est particulièrement intéressante dans la mesure où elle permet de récupérer d'une part les fibres et, d'autre part, une poudre (liant + charges), recyclables respectivement à titre de fibres de renfort et de charges dans l'élaboration de nouveaux matériaux composites. Elle est notamment illustrée dans la demande EP-A-0 443 051. Toutefois, on ne peut traiter par cette voie des déchets souillés, notamment par des huiles, adhésifs, peintures...
- la "valorisation chimique" qui a été principalement mise en oeuvre selon deux types de procédé. Selon une première variante, on décompose thermiquement lesdits matériaux en l'absence totale d'oxygène (pyrolyse). Cette voie semble la voie royale pour le traitement de déchets souillés... Elle permet la récupération de produits organiques (pétroliers), de gaz à haut pouvoir énergétique et d'un résidu solide inorganique (renfermant les fibres) recyclable à titre de charges dans l'élaboration de nouveaux matériaux composites. Elle ne permet toutefois pas la récupération des fibres et leur recyclage à titre de fibres de renfort... Selon une seconde variante, lesdits matériaux sont dégradés chimiquement par hydrogénation, hydrolyse, glycolyse... Dans le cadre de cette variante, on a obtenu de très bons résultats par glycolyse de résines polyuréthanne renforcées avec des fibres de verre. A l'issue du traitement chimique, on obtient d'une part des polyols, utilisables dans la formulation de résines polyuréthanne (pour l'élaboration de nouveaux matériaux composites) et des fibres de verte (quasi intactes), utilisables à titre de fibres de renfort.

On a par ailleurs exploité d'autres voies chimiques pour la valorisation de polymères non renforcés (ne contenant pas de fibres) et notamment pour le recyclage desdits polymères à titre d'agent texturant de liants hydrocarbonés type bitume. On a en particulier décrit :
- dans la demande FR-A-2 569 416, l'action de l'ozone sur une polyoléfine (polyéthylène) pour activer ladite polyoléfine et la rendre ainsi compatible avec le bitume;
- dans la demande FR-A-2 663 640, l'action de l'ozone, dans des conditions particulières, pour déréticuler des polymères réticulés à base d'éthylène vinyl acétate (E.V.A.).

Selon l'enseignement de ces documents, l'ozone est capable de provoquer la déréticulation de matériaux polymères réticulés en fragments polymériques de masse moléculaire inférieure à celle desdits matériaux polymériques réticulés et de générer des groupes réactifs (peroxydes-hydroperoxydes) à la surface desdits fragments.

Selon l'invention, on propose présentement un procédé de traitement de matériaux composites renforcés à l'issue duquel on récupère les fibres de renfort, recyclables à titre de fibres de renfort.

Ledit procédé se situe dans un contexte de valorisation matière par voie chimique et convient pour le traitement de matériaux composites souillés.

De façon caractéristique, il comprend la soumission desdits matériaux à l'action de l'ozone.

Le procédé de l'invention ne concerne pas le traitement de matériaux dont la matrice renferme un azoture de métal alcalin et au moins un oxydant, susceptible de réagir avec ledit azoture. Le traitement de tels matériaux - à l'état de particules, dont le diamètre est inférieur ou égal à 2 mm - décrit dans le brevet US-A-5,073,273 fait aussi intervenir l'ozone; ozone qui convertit ledit azoture en azote et en nitrate. Au sein des matériaux, composites, au sens de l'invention, l'ozone développe une action tout-à-fait différente.

La demanderesse a de façon tout à fait surprenante observé que, sous l'action de l'ozone, les matériaux composites, comprenant une matrice et des fibres de renfort, ne se dissociaient pas en des fragments quelconques, mais se déstructuraient "proprement" par, notamment, désolidarisation desdites fibres de ladite matrice. Ceci est vraiment surprenant dans la mesure où l'homme du métier n'ignore pas la force de la liaison matrice/fibres générée lors de l'élaboration des matériaux composites...

On propose donc, selon l'invention, dans le contexte général des procédés de valorisation des matériaux composites, un procédé chimique qui assure la séparation des fibres de la matrice sans altérer lesdites fibres. A l'issue dudit procédé, les fibres sont aisément récupérables et recyclables à titres de fibres de renfort. Ce recyclage (fibres de renfort → fibres de renfort) est très intéressant en lui-même en ce qu'il valorise le produit (plus qu'un recyclage du type : fibres de renfort → charges minérales), mais il l'est d'autant plus que les fibres recyclées le sont dans un état qui facilite leur incorporation ultérieure dans une matrice. En effet, lesdites fibres sont récupérées, à l'issue du traitement selon l'invention, avec des sites actifs (groupes peroxy, hydroperoxy) à leur surface. Ces sites résultent de l'action de l'ozone sur le "revêtement" de résine resté à la surface desdites fibres. La présence de ces sites simplifie l'incorporation des fibres recyclées dans la matrice. Pour ladite incorporation, on pourra faire intervenir moins de catalyseur... voire se dispenser de catalyseur. En cela, le procédé de l'invention est particulièrement performant.

Par ailleurs, ledit procédé permet la récupération de la matrice. Celle-ci, généralement réduite en poudre, d'une granulométrie variable (dépendant notamment des conditions de l'ozonisation et de la granulométrie des matériaux composites de départ) est recyclable, dans le contexte de l'élaboration de matériaux composites, à titre de charges.

Les matériaux composites sont donc, selon l'invention, traités avec un courant d'ozone. Ledit courant peut être obtenu avec tout type de générateur d'ozone classique et notamment avec un réacteur à plasma froid à partir d'oxygène.

Généralement, ledit ozone intervient, selon l'invention, en mélange avec de l'oxygène.

L'ozonisation peut être mise en oeuvre selon différentes variantes. L'ozone, en mélange éventuellement avec de l'oxygène, peut notamment être envoyé au contact du matériau à traiter en lit fluidisé ou mis à buller dans un liquide au sein duquel le matériau à traiter est dispersé.

Quelle que soit la variante mise en oeuvre pour faire agir l'ozone sur les matériaux composites, il intervient avantageusement selon l'invention une tierce substance, dite vecteur d'ozone. Cette substance, non dégradable ou peu dégradable par l'ozone, est avantageusement utilisée pour préparer, sensibiliser, les matériaux à traiter et/ou les matériaux traités par ozonisation. En effet, elle peut intervenir, selon certaines variantes de l'invention préalablement à l'ozonisation, conjointement à ladite ozonisation, ou encore, avantageusement, préalablement et conjointement à ladite ozonisation.

Le matériau à traiter, mis en contact avec cette substance, peut s'en imprègner et devenir ainsi plus sensible à l'ozonisation.

Ladite substance vecteur d'ozone peut intervenir dans le procédé de l'invention à l'état liquide et/ou gazeux.

Selon la première variante dudit procédé évoquée ci-dessus (mise en oeuvre en lit fluidisé), ladite substance est avantageusement envoyée, conjointement à l'ozone dans le lit fluidisé. Ladite substance consiste généralement, selon cette variante de mise en oeuvre, en un gaz inerte. Un tel gaz inerte, azote ou argon par exemple, intervient notamment pour entretenir la fluidisation, peur diluer et guider l'ozone...

Selon la seconde variante dudit procédé évoquée ci-dessus (mise en oeuvre par bullage d'ozone dans un liquide), ladite substance peut consister en le liquide au sein duquel les matériaux à traiter sont dispersés. Elle peut aussi n'en constituer qu'une partie... Elle est avantageusement choisie parmi le chlorobutane, le 1,1,1-trichloroéthane, le dichlorométhane, le tétrachlorure de carbone, la méthyléthylcétone, le diméthylformamide, l'eau. Cette liste n'est nullement exhaustive. L'homme du métier qui souhaiterait optimiser la mise en oeuvre du procédé de l'invention pour le traitement de tel type de matériaux composites saura, si nécessaire, sélectionner une substance vecteur d'ozone convenable, parmi les composés ci-dessus et plus généralement parmi les produits qualifiés de solvants, relativement inertes à l'ozone. On insistera ici sur le fait que ladite substance n'intervient pas, dans le cadre du procédé de l'invention, à titre de solvant.

Dans le cadre de cette seconde variante du procédé de l'invention (mise en oeuvre par bullage d'ozone, dans un liquide, avantageusement vecteur d'ozone), on opère avantageusement à une pression supérieure à la pression atmosphérique. On peut ainsi mettre en oeuvre la réaction d'ozonisation, "en phase liquide", à température plus élevée...

L'optimisation des paramètres de mise en oeuvre de la réaction d'ozonisation - pression, température, temps de séjour, granulométrie des matériaux traités, notamment... - est à la portée de l'homme du métier.

On a notamment obtenu de très bons résultats, en faisant buller des mélanges d'ozone et d'oygène, dans des liquides vecteurs d'ozone, chargés en particules de matériaux composites, à la pression atmosphérique, à des températures comprises entre 20°C et 50°C, pendant environ 5 heures. L'homme du métier comprendra aisément qu'en opérant dans des conditions, de pression notamment, plus draconiennes, on peut, par exemple, diminuer la durée de la réaction ou traiter des particules plus grosses...

La granulométrie des matériaux traités est en effet un paramètre important de la réaction d'ozonisation. Il apparaît toutefois, selon le procédé de l'invention qu'il n'est nullement obligatoire, pour l'obtention du résultat, de soumettre à l'action de l'ozone de très fines particules. On peut traiter, dans des conditions opératoires tout à fait raisonnables, des particules d'une granulométrie bien supérieure à 2 mm. Ceci constitue un atout considérable du procédé de l'invention. Pour des raisons pratiques et au vu des dimensions des matériaux à traiter, on mettra toutefois généralement en oeuvre l'ozonisation selon l'invention, sur des matériaux composites, préalablement, très grossièrement broyés.

Un autre atout du procédé de l'invention est son large domaine d'application. Il peut être mis en oeuvre, résultat à l'appui (valorisation matière de la matrice et des fibres) pour le traitement (recyclage) de nombreux types de matériaux composites.

On rappelle incidemment ici qu'il convient pour le traitement de matériaux composites souillés.

Il convient notamment pour le traitement de matériaux composites comprenant une matrice du type thermodurcissable, thermoplastique ou céramique. Plus précisément, on peut notamment traiter, par ozonisation selon l'invention, des matériaux composites dont la matrice est à base :
- d'une résine thermodurcissable : par exemple une résine phénolique, époxy, polyester insaturé ou polyuréthanne...
- d'une résine thermoplastique : par exemple une résine polyamide, polyéthylène, polycarbonate, une résine capable de générer des TRE (Thermoplastique Renforcée Estampable)...
- d'une céramique : par exemple type SiC, C...; on englobe présentement dans les matrices céramiques les matrices carbonées.

De façon classique, ladite matrice contient également des charges minérales.

Elle est renforcée par des fibres qui peuvent notamment consister en des fibres céramiques (SiC, alumine, aluminate...), fibres de carbone, de verre, de Kevlar®, de bore. Lesdites fibres, courtes ou longues, interviennent au sein de la matrice, de façon aléatoire ou structurée. On les y trouve notamment sous la forme de fibres dispersées ou sous la forme d'armatures structurées type tissés ou non-tissés...

Le champ d'application de l'invention est donc, comme précisé ci-dessus, très large.

L'homme du métier aura déjà compris tout l'intérêt du procédé de l'invention qui sera avantageusement exploité dans le cadre du vaste marché du recyclage des matières à mouler thermodurcissables, composées de résines polyester insaturé, de textiles de renfort en fibres de verre ainsi que de charges et d'additifs. Ces matières à mouler, que l'on met en forme sous l'action de la température et de la pression, sont très utilisées de nos jours, notamment dans les industries automobile et électrique. Elles sont disponibles sous forme de mat de résine SMC plan (Sheet Moulding Compound), également dénommé préimprégné, ou de matière à mouler pâteuse appelée BMC (Bulk Moulding Compound) ou DMC (Dough Moulding Compound). L'intérêt du procédé de l'invention est tout aussi évident sur le marché plus étroit des matériaux composites dans la structure desquels interviennent des fibres à très haute valeur ajoutée.

L'intérêt dudit procédé est d'autant plus évident qu'il permet de récupérer des fibres recyclables à titre de fibres de renfort et comportant des sites (groupes) réactifs à leur surface.

L'invention présentement revendiquée est illustrée par l'exemple ci-après.

On a traité par ozonisation des particules d'environ 1 mm, obtenues par limage d'un matériau composite type SMC (Sheet Moulding Compound). Ledit matériau comprend une matrice (résine polyester insaturé + carbonate de calcium), renforcée par des fibres de verre. Lesdites particules (50 g) ont été introduites dans un réacteur renfermant un Titre de CH₂Cl₂. On a fait barboter dans ledit réacteur, maintenu à 50°C, un mélange oxygène/ozone. Le débit du mélange gazeux était réglé à 0,4 litre par minute ; l'ozone était préparé dans un réacteur à plasma froid à partir d'air, à 50mg/l d'oxygène.

Au bout de 5 heures, on a stoppé le barbotage. Après décantation du milieu réactionnel, on a observé dans le fond du réacteur une poudre très fine et, surnageant à la surface du liquide, les fibres de verre d'environ 1 mm.

On a mis en évidence sur les fibres de verre récupérées la présence de groupes peroxy et hydroperoxy.

De telles fibres conviennent parfaitement pour l'élaboration d'un nouveau matériau composite de type BMC, au sein duquel elles interviennent à titre de fibres de renfort.

## Revendications

1. Procédé de traitement de matériaux composites, comprenant une matrice et des fibres de renfort, destiné à séparer lesdites fibres de ladite matrice pour la récupération, notamment desdites fibres, recyclables à titre de fibres de renfort, caractérisé en ce que l'on soumet lesdits matériaux à l'action de l'ozone; à l'exclusion du traitement des matériaux dont la matrice renferme un azoture de métal alcalin et au moins un oxydant, susceptible de réagir avec ledit azoture.

2. Procédé selon la revendication 1, caractérisé en ce que l'ozone intervient en mélange avec de l'oxygène.

3. Procédé selon l'une des revendications 1 ou 2, caractérisé en ce que lesdits matériaux, préalablement et/ou conjointement à l'action de l'ozone, sont mis en contact avec une substance dite vecteur d'ozone, non dégradable ou peu dégradable par l'ozone.

4. Procédé selon la revendication 3, caractérisé en ce que ladite substance intervient à l'état liquide et/ou gazeux.

5. Procédé selon l'une des revendications 3 ou 4, caractérisé en ce que ladite substance est choisie parmi le chlorobutane, le 1,1,1-trichloroéthane, le dichlorométhane, le tétrachlorure de carbone, la méthyléthylcétone, le diméthylformamide, l'eau, les gaz inertes ...

6. Procédé selon l'une quelconque des revendications 1 à 5, caractérisé en ce que lesdits matériaux sont dispersés au sein d'un liquide vecteur d'ozone, dans lequel bulle l'ozone.

7. Procédé selon la revendication 6, caractérisé en ce qu'il est mis en oeuvre à une pression supérieure à la pression atmosphérique.

8. Procédé selon l'une quelconque des revendications 1 à 5, caractérisé en ce que de l'ozone et une substance vecteur d'ozone sont envoyés dans un lit fluidisé desdits matériaux.

9. Procédé selon l'une quelconque des revendications 1 à 8, caractérisé en ce qu'il est mis en oeuvre avec des matériaux composites broyés.

10. Procédé selon l'une quelconque des revendications 1 à 9, caractérisé en ce qu'il est mis en oeuvre avec des matériaux composites souillés.

11. Procédé selon l'une quelconque des revendications 1 à 10, caractérisé en ce que ladite matrice est du type thermodurcissable, thermoplastique ou céramique.

12. Procédé selon l'une quelconque des revendications 1 à 11, caractérisé en ce que lesdites fibres de renfort consistent en des fibres céramiques, de carbone, de verre, de Kevlar® ou de bore.

13. Procédé selon l'une quelconque des revendications 1 à 12, caractérisé en ce qu'il est mis en oeuvre pour le traitement de matériaux composites fibres de verre-polyester.

14. Procédé selon l'une quelconque des revendications 1 à 13, caractérisé en ce que les fibres séparées comportent des groupes réactifs à leur surface.

## Claims

1. A process for the treatment of composite materials comprising a matrix and reinforcing fibers, the purpose of said process being to separate said fibers from said matrix in order particularly to recover said fibers, which can be recycled as reinforcing fibers, characterized in that said materials are exposed to ozone, to the exclusion of the treatment of materials whose matrix contains an alkali metal nitride and at least one oxidizing agent liable to react with said nitride.

2. The process according to claim 1, characterized in that the ozone is used as a mixture with oxygen.

3. The process according to one of claims 1 or 2, characterized in that, before and/or at the same time as exposure to ozone, said materials are brought into contact with a substance called an ozone vector, which is non-degradable or only slightly degradable by ozone.

4. The process according to claim 3, characterized in that said substance is used in the liquid and/or gaseous state.

5. The process according to one of claims 3 or 4, characterized in that said substance is selected from chlorobutane, 1,1,1-trichloroethane, dichloromethane, carbon tetrachloride, methyl ethyl ketone, dimethylformamide, water, inert gases, etc.

6. The process according to any one of claims 1 to 5, characterized in that said materials are dispersed in a liquid ozone vector into which the ozone is bubbled.

7. The process according to claim 6, characterized in that it is carried out at a pressure above atmospheric pressure.

8. The process according to any one of claims 1 to 5, characterized in that ozone and an ozone vector are sent into a fluidized bed of said materials.

9. The process according to any one of claims 1 to 8, characterized in that it is carried out with ground composite materials.

10. The process according to any one of claims 1 to 9, characterized in that it is carried out with contaminated composite materials.

11. The process according to any one of claims 1 to 10, characterized in that said matrix is of the thermosetting, thermoplastic or ceramic type.

12. The process according to any one of claims 1 to 11, characterized in that said reinforcing fibers consist of ceramic fibers, carbon fibers, glass fibers, Kevlar® fibers or boron fibers.

13. The process according to any one of claims 1 to 12, characterized in that it is for treating glass fiber/polyester composite materials.

14. The process according to any one of claims 1 to 13, characterized in that the separated fibers contain reactive groups on their surface.

## Patentansprüche

1. Verfahren zur Behandlung von eine Matrix und Verstärkungsfasern aufweisenden Verbundmaterialien zum Zweck der Trennung der Fasern von der Matrix zur Rückgewinnung insbesondere der Fasern, die in ihrer Eigenschaft als Verstärkungsfasern wiederverwertbar sind, dadurch gekennzeichnet, daß man die Materialien der Einwirkung von Ozon unterzieht; mit Ausnahme der Behandlung der Materialien, deren Matrix ein Alkalimetallnitrid und mindestens ein Oxidationsmittel enthält und die dazu neigen, mittels des Nitrids zu reagieren.

2. Verfahren nach Anspruch 1, dadurch gekennzeichnet, daß das Ozon im Gemisch mit Sauerstoff teilnimmt.

3. Verfahren nach Anspruch 1 oder 2, dadurch gekennzeichnet, daß die Materialien vor und/oder zusammen mit der Einwirkung des Ozons mit einer von dem Ozon nicht abbaubaren oder wenig abbaubaren sogenannten Trägersubstanz für das Ozon in Berührung gebracht werden.

4. Verfahren nach Anspruch 3, dadurch gekennzeichnet, daß die Substanz im flüssigen und/oder gasförmigen Zustand teilnimmt.

5. Verfahren nach Anspruch 3 oder 4, dadurch gekennzeichnet, daß die Substanz ausgewählt ist aus Chlorbutan, 1,1,1-Trichlorethan, Dichlormethan, Tetrachlorkohlenstoff, Methylethylketon, Dimethylformamid, Wasser, Inertgasen.

6. Verfahren nach einem der Ansprüche 1 bis 5, dadurch gekennzeichnet, daß die Materialien dispergiert sind in einer Trägerflüssigkeit des Ozons, in die das Ozon perlt.

7. Verfahren nach Anspruch 6, dadurch gekennzeichnet, daß es bei einem höheren Druck als Atmosphärendruck durchgeführt wird.

8. Verfahren nach einem der Ansprüche 1 bis 5, dadurch gekennzeichnet, daß das Ozon und eine Trägersubstanz des Ozons in ein Fließbett der Materialien eingeleitet werden.

9. Verfahren nach einem der Ansprüche 1 bis 8, dadurch gekennzeichnet, daß es mit zerkleinerten Verbundmaterialien durchgeführt wird.

10. Verfahren nach einem der Ansprüche 1 bis 9, dadurch gekennzeichnet, daß es mit verunreinigten Verbundmaterialien durchgeführt wird.

11. Verfahren nach einem der Ansprüche 1 bis 10, dadurch gekennzeichnet, daß die Matrix vom wärmehärtbaren, thermoplastischen oder keramischen Typ ist.

12. Verfahren nach einem der Ansprüche 1 bis 11, dadurch gekennzeichnet, daß die Verstärkungsfasern bestehen aus Fasern aus Keramik, aus Kohlenstoff, aus Glas, aus Kevlar oder aus Bor.

13. Verfahren nach einem der Ansprüche 1 bis 12, dadurch gekennzeichnet, daß es zur Behandlung von Faser-Verbundmaterialien aus Glas-Polyester durchgeführt wird.

14. Verfahren nach einem der Ansprüche 1 bis 13, dadurch gekennzeichnet, daß die abgetrennten Fasern an ihrer Oberfläche reaktive Gruppen besitzen.
